# EUROPEAN PATENT APPLICATION

(11) **EP 4 838 362 A1**
(43) Date of publication of application: **11.11.2026**
(21) Application number: 26175880.9
(22) Date of filing: 30.04.2026
(51) Int. Cl.: G06F 9/50, G06F 3/06

(54) **BALANCING STORAGE WORKLOADS ON HYPERCONVERGED INFRASTRUCTURE SYSTEMS**

(30) Priority: 05.05.2025 US 202519198610
(71) Applicant: VMware LLC, Palo Alto, CA 94304 (US)
(72) Inventor: Singh, Randhir, 560092 Bangalore (IN); Kancharla, Hemanth, 560061 Bangalore (IN); Dandi, Durga Prasad, 532001 Srikakulam (IN); Knauft, Eric Shannon, San Francisco, 94131 (US); Dai, Peng, Acton, 01720 (US)
(74) Representative: Dilg, Haeusler, Schindelmann Patentanwaltsgesellschaft mbH

(57) **Abstract**

A computer system is configured to balance storage workloads executing in the computer system, by performing the steps of: determining first object costs respectively associated with first storage objects managed by a first host computer, the first object costs being based on first input/output operations (IOs) performed on the first storage objects; determining second object costs respectively associated with second storage objects managed by a second host computer, the second object costs being based on second IOs performed on the second storage objects; determining a first total cost for the first host computer by aggregating the first object costs, and determining a second total cost for the second host computer by aggregating the second object costs; and based at least on the first and second total costs, designating third IOs on one of the first storage objects to be performed by the second host computer.

## Description

### Background

Data centers today often utilize hyperconverged infrastructure (HCI) systems. An HCI system is an information technology (IT) architecture that combines compute, storage, and networking resources into a single integrated solution. Such a system allows for software to manage the resources across several host computers, referred to herein simply as "hosts." The software manages the resources using virtualized infrastructure without the need for traditional data center hardware. In particular, virtualized computing instances such as virtual machines (VMs) may be executed, and physical compute, storage, and networking resources may be consolidated into virtualized units assigned to the VMs.

For flexibility, HCI systems are often implemented as disaggregated HCI (dHCI) systems. A dHCI system separates the resources of a traditional HCI setup such as the compute and storage resources. For example, a first cluster of hosts, referred to as a "compute cluster," may provide processing power for the dHCI system, and a second cluster of hosts, referred to as a "storage cluster," may provide storage resources. A cluster is group of hosts that are managed together to provide cluster-level functions such as load balancing across hosts of the cluster, distributed power management, dynamic VM placement according to affinity and anti-affinity rules, and high availability. Hosts in compute clusters are referred to herein as "compute hosts," and hosts in storage clusters are referred to herein as "storage hosts." According to need, more compute hosts or more storage hosts may be added to independently scale the compute or storage resources of a dHCI system.

Storage objects in an HCI system are typically distributed across hosts as evenly as possible. However, HCI systems often fail to effectively balance all the storage-related tasks that hosts handle, including reading, writing, managing, and accessing data, referred to herein as "storage workloads." The storage workloads include performing read and write input/output operations (IOs) to read from and write to storage objects. When storage workloads among hosts are unbalanced, overutilized hosts perform IOs inefficiently, thus creating storage bottlenecks in the HCI system. An improved solution for balancing storage workloads across hosts is thus desired.

### Summary

One or more embodiments provide a computer system including a plurality of hosts, each of the hosts including a processor and memory. The processors of the hosts execute instructions stored in the respective memory of the hosts to balance storage workloads executing in the computer system. By executing such instructions, the computer system performs the steps of: determining, by a first host of the hosts, first object costs respectively associated with first storage objects managed by the first host, the first object costs being based on first IOs performed on the first storage objects; determining, by a second host of the hosts, second object costs respectively associated with second storage objects managed by the second host, the second object costs being based on second IOs performed on the second storage objects; determining a first total cost for the first host by aggregating the first object costs, and determining a second total cost for the second host by aggregating the second object costs; and based at least on the first and second total costs, designating third IOs on one of the first storage objects to be performed by the second host.

Further embodiments include a method comprising the above steps and a plurality of non-transitory computer-readable media comprising instructions that cause a computer system to carry out the above steps.

### Brief Description of the Drawings

Figure 1 is a block diagram of a computer system in which embodiments may be implemented.
Figure 2 is a flow diagram of a method that may be performed by a storage host of the computer system to determine a total cost for the storage host based on IOs performed on storage objects managed by the storage host, according to some embodiments.
Figure 3 is a flow diagram of a method that may be performed by a storage host of the computer system to balance storage workloads of the computer system, according to some embodiments.
Figure 4 is a flow diagram of a method that may be performed by a storage host of the computer system to update the management of one or more storage objects, according to some embodiments.

### Detailed Description

Techniques are described for balancing storage workloads across hosts of an HCI system. According to embodiments, hosts continuously monitor IOs that are performed on storage objects that they manage. For each host, object costs are determined respectively for the storage objects that the host manages. Those costs are then aggregated per host to determine respective total costs for the hosts.

As used herein, an object cost refers to a value or metric indicative of the relative computational or system resource expenditure required to perform IOs for an associated storage object, as compared to other storage objects. A total cost for a host refers to a value or metric indicative of the relative computational or system resource expenditure required to perform IOs for all of the storage objects of the associated host, as compared to other hosts. Based on the total costs among different hosts, if it is determined that storage workloads are unbalanced, the HCI system is updated so that overutilized hosts perform less IOs and underutilized hosts perform more IOs. Accordingly, techniques allow for continuously balancing storage workloads over time regardless of changes, e.g., in usages of various storage objects.

According to some embodiments, costs for storage objects are based at least partly on "expected costs" of the IOs performed thereon. As used herein, expected costs of IOs are numbers indicating amounts of computing resources of a computer system expected to be consumed by corresponding IOs, including for example, central processing unit (CPU) cycles, memory, storage bandwidth, input/output bandwidth, network bandwidth, or any combination thereof. Such expected costs may include numbers that are "fixed," e.g., based on whether the IOs are read IOs or write IOs. For example, there may be one fixed expected cost that applies to all read IOs and another fixed expected cost that applies to all write IOs. The expected costs may also include numbers that are "variable," e.g., based on how much data is targeted by the IOs and storage policies for targeted storage objects. By factoring in such information about the IOs, overall costs for each of the storage objects may be determined more accurately based on the specific IOs performed thereon. Accordingly, embodiments may accurately identify when storage workloads are unbalanced based on the storage objects thereof, and embodiments may thus rebalance storage workloads effectively, e.g., by reducing the amount of IOs being performed on hosts when they are receiving a large number of IOs that consume significant computing resources.

According to some embodiments, costs for storage objects are based at least partly on performance metrics of the IOs such as how long it ends up taking to complete them. Such embodiments may determine, based such performance metrics, "latency costs" for those IOs. As used herein, latency costs of IOs are numbers indicating durations of corresponding IOs. For example, the longer it takes IOs on a particular storage object to be completed, such embodiments may assign higher overall costs to those storage objects. Accordingly, embodiments may accurately identify when hosts are inefficiently handling their respective storage workloads, and embodiments may thus rebalance storage workloads effectively, e.g., by reducing the amount of IOs being performed on hosts that are currently performing IOs inefficiently.

According to some embodiments, rebalancing decisions are based on moving averages of the costs for storage objects. This may account for fluctuations in activity such as sudden bursts of IO activity for various storage objects. Making decisions based on moving averages allows for stabilizing balancing decisions, e.g., by not reducing IOs for a host in response to a brief spike in IOs. Similarly, according to some embodiments, storage workloads are only rebalanced when hosts are outside of ranges of total costs, as opposed to constantly rebalancing storage workloads when they are slightly uneven. Accordingly, such embodiments may avoid disturbing the HCI system and wasting resources, by only rebalancing when there is a clear need. These and further aspects of the invention are discussed below with respect to the drawings.

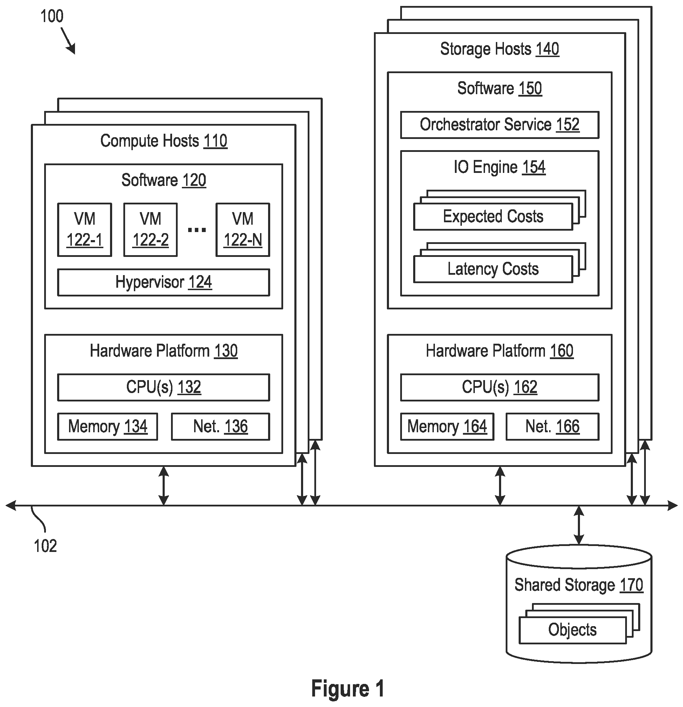

Figure 1 is a block diagram of a computer system 100 in which embodiments may be implemented. In the example of Figure 1, computer system 100 is dHCI system, including a plurality of compute hosts 110 and storage hosts 140. However, it should be noted that embodiments are not limited to dHCI systems and are also applicable to other computer systems such as traditional HCI systems in which compute and storage resources are managed by the same hosts.

Compute hosts 110 are each constructed on a hardware platform 130 such as an x86 architecture platform. Hardware platform 130 includes components of a computer, such as one or more CPUs 132, memory 134 such as random-access memory (RAM), and networking hardware 136 such as one or more network interface controllers (NICs). CPU(s) 132 are configured to execute instructions such as executable instructions that perform one or more operations described herein, which may be stored in memory 134. Using networking hardware 136, compute hosts 110 may communicate with each other and with other devices such as storage hosts 140 over a network 102 such as a local area network (LAN).

Hardware platform 130 supports software 120. Software 120 may include a hypervisor 124, which is a software layer or component that supports the execution of multiple VMs 122. One example of hypervisor 124 is a VMware ESX^{®} hypervisor, available from VMware LLC. A VM is a software emulation of a host including its own guest operating system (OS) that may support one or more workloads. VMs share the hardware resources of the hosts on which they execute, including the processing, memory, storage, and networking resources. A VM is an example of a virtualized computing instance, which is an addressable data compute node (DCN) or isolated user space instance. Although the disclosure is described with reference to VMs, the teachings herein also apply to other types of virtualized computing instances such as containers.

Storage hosts 140 are each constructed on a hardware platform 160 such as an x86 architecture platform. Hardware platform 160 includes components of a computer, such as one or more CPUs 162, memory 164 such as RAM, and networking hardware 166 such as one or more NICs. CPU(s) 162 are configured to execute instructions such as executable instructions that perform one or more operations described herein, which may be stored in memory 164. Using networking hardware 166, storage hosts 140 may communicate with each other and with other devices such as compute hosts 110 over network 102.

Storage hosts 140 access a shared storage 170. For example, as illustrated in Figure 1, shared storage 170 may be stored externally from storage hosts 140, e.g., on one or more magnetic drives or solid-state drives (SSDs) of a storage array. As another example, although shared storage 170 is illustrated as separate from storage hosts 140, shared storage 170 may instead be implemented by aggregating and provisioning local storage (not shown) of storage hosts 140 as a virtual storage area network (vSAN). Shared storage 170 includes a plurality of storage objects, also referred to herein simply as "objects." A storage object is an entity that is persisted, managed, and accessed in a storage device such as a magnetic device or SSD. For example, the objects may include virtual disks of VMs 122, a virtual disk being a file or set of files that reproduce the function of a storage device. For example, a virtual disk can emulate a magnetic drive or SSD for an associated one of VMs 122.

As used herein, one of storage hosts 140 that performs IOs for an object is referred to as "managing" that object. For example, the one of storage hosts 140 that manages an object may store a complete copy of that object in physical storage such as one or more local magnetic drives or SSDs therein. As another example, in the case of a vSAN, the object may be distributed such that the one of storage hosts 140 that manages that object may store a portion of that object in local storage thereof, the remainder of that object being stored in local storage of others of storage hosts 140. In such case, the one of storage hosts 140 that manages the object receives IOs therefor and performs functionalities for performing and managing the IOs, including forwarding IOs to others of storage hosts 140 when those IOs target data stored by others of storage hosts 140.

Hardware platform 160 supports software 150. Software 150 may include an orchestrator service 152 and an IO engine 154. According to some embodiments, orchestrator service 152 is software that is programmed to analyze storage workloads across storage hosts 140 and determine when to rebalance such storage workloads. IO engine 154 is software that may be programmed to manage and execute IOs received from VMs 122, using the objects of shared storage 170.

According to some embodiments, IO engine 154 includes a plurality of expected costs and latency costs for IOs performed by IO engine 154. The expected costs indicate amounts of computing resources of computer system 100 expected to be consumed by corresponding IOs. The latency costs indicate durations of corresponding IOs, i.e., how long it takes corresponding IOs to be completed. The determination and usage of expected costs and latency costs are discussed below.

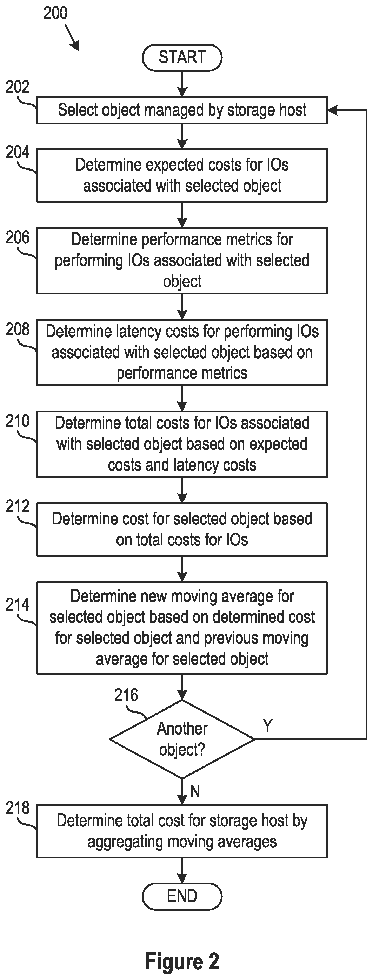

Figure 2 is a flow diagram of a method 200 that may be performed by one of storage hosts 140 to determine a total cost therefor based on IOs performed on objects managed thereby, according to some embodiments. At step 202, storage host 140 selects one of the objects in shared storage 170 managed thereby. At step 204, storage host 140 determines the expected costs for IOs associated with the selected object. Storage host 140 may determine such expected costs for IOs performed over a previous time frame, e.g., over the past 1 minute. As discussed earlier, the expected cost of each IO may include both a fixed expected cost and a variable expected cost.

For example, experiments may be performed on several read IOs and several write IOs to determine relative fixed amounts of resources consumed when performing them. Based on such results, fixed expected costs may be assigned to write IOs and read IOs. For example, write IOs may generally consume more resources than read IOs because of extra overhead of performing write IOs such as using locking mechanisms to prevent conflicts. Accordingly, a higher fixed expected cost may be assigned to write IOs than to read IOs. For example, all read IOs may be assigned a fixed expected cost such as 2,340, and all write IOs may be assigned a larger fixed expected cost such as 4,681.

Variable expected costs may similarly be determined based on the above experimentation. Based on the results, variable expected costs may be assigned to IOs based on how the amounts of resources consumed vary, e.g., based on amounts of data targeted by the IOs and policies of targeted objects. For example, for each IO, the amount of data targeted by the IO may be combined with a factor such as a multiplier, to determine the variable expected cost. For example, that factor may be larger for write IOs than read IOs because the amounts of resources consumed by the IO increase at a higher rate for write IOs than read IOs as the amounts of data targeted thereby increases.

Such relationship may especially be true if policies such as redundant array of independent disks (RAID) configurations are applied, which are methods for distributing data across multiple physical disks. Different RAID levels offer varying fault tolerances and performance optimizations. For example, depending on such policies, a multiplier of 1 may be used for read IOs, and a multiplier of 1.2 may be used for write IOs. Continuing the above example, for a 4-kilobyte (4,096-byte) read IO, the variable expected cost (after multiplying by 1) may be 4,096, and for a 4-kilobyte write IO, the variable expected cost (after multiplying by 1.2) may be 4,915.2.

The fixed and variable expected costs of each IO may be combined, e.g., summed, to determine overall expected costs. Continuing the above example, for a 4-kilobyte read IO, the expected cost (after adding a 2,340 fixed expected cost to a 4,096 variable expected cost) may be 6,436. For a 4-kilobye write IO, the expected cost (after adding a 4,681 fixed expected cost to a 4,915.2 variable expected cost) may be 9,596.2. Expected costs may be computed similarly by IO engine 154 for all the IOs performed on the selected object over the previous time frame.

At step 206, storage host 140 determines performance metrics for performing the IOs associated with the selected object. For example, storage host 140 may continuously monitor how long IOs take to complete. Storage host 140 may store such information in memory 164 thereof or in shared storage 170 and then later read such information from memory 164 or shared storage 170.

At step 208, storage host 140 determines latency costs for performing the IOs associated with the selected object based on the performance metrics. For example, for each IO, the expected cost may be combined with a factor such as a multiplier, to determine the latency cost. For example, that factor may increase as the amount of time it takes to complete an IO increases. For example, if the amount of time it takes for an IO to complete is less than a threshold such as 500 µs, the factor may be a base percentage such as 5%.

For additional increments of time, e.g., for every 50 µs above such threshold, that factor may increase by 2%, i.e., 7% if the IO takes between 500 and 549 µs, 9% if the IO takes between 550 and 599 µs, 11% if the IO takes between 600 and 649 µs, etc. Continuing the above example, if a 4-kilobyte read IO (with an expected cost of 6,436) takes between 600 and 649 µs, the latency cost (after multiplying by 11%) may be 707.96. If a 4-kilobyte write IO (with an expected cost of 9,596.2) takes between 600 and 649 µs, the latency cost (after multiplying by 11%) may be 1,055.582. Latency costs may be computed similarly by IO engine 154 for all the IOs performed on the selected object over the previous time frame.

At step 210, storage host 140 determines total costs for the IOs associated with the selected object based on the expected costs and latency costs. For example, for each IO, the expected cost may be added to the latency cost. Continuing the above example, for each 4-kilobyte read IO that takes between 600 and 649 µs, the expected cost (6,436) may be added to the latency cost (707.96) to determine a total cost of 7,143.96. For each 4-kilobyte write IO that takes between 600 and 649 µs, the expected cost (9,596.2) may be added to the latency cost (1,055.582) to determine a total cost of 10,651.782. Total costs may be computed similarly by IO engine 154 for all the IOs performed on the selected object over the previous time frame.

At step 212, storage host 140 determines a cost for the selected object based on total costs for the IOs associated therewith, e.g., by summing the total costs. At step 214, storage host 140 determines a new moving average for the selected object based on the cost for the selected object determined at step 212 and a previous moving average for the selected object. A moving average is a statistical method that involves calculating the average of a set of values over a specific period, where the average is recalculated as new data points are added.

For example, storage host 140 may apply an exponential moving average (EMA), i.e., determine an EMA for the selected object based on the cost for the selected object determined at step 212 and a previous EMA for the selected object. An EMA is a type of moving average that applies exponentially decreasing weights to older data points, giving more importance to recent data. For example, each time a time frame elapses, the new EMA may be computed according to the below equation, where EMAt is a new EMA for the object at a time t, EMAₜ₋₁ is a most recently computed EMA for the object (at a previous performance of step 214 at a time t - 1), Costt is the determined cost for the object at time t, and α is a smoothing factor between 0 and 1. ${EMA}_{t} = α ∗ {Cost}_{t} + \left(1-α\right) ∗ {EMA}_{t - 1}$

At step 216, if storage host 140 manages another object, i.e., storage host 140 performed IOs for another object over the previous time frame, method 200 returns to step 202, and storage host 140 repeats steps 202-214 to determine an EMA for another object. Once storage host 140 has computed EMAs for each of its objects, after step 216, method 200 moves to step 218. At step 218, storage host 140 determines the total cost therefor by aggregating the moving averages of each of the its objects, e.g., by summing them. Storage host 140 may further persist the total cost in shared storage 170. After step 218, method 200 ends.

It should be noted that embodiments are not limited to the steps for method 200 for computing a total cost for storage host 140. For example, the illustrated steps include computing a moving average, which offers benefits as discussed above, including accounting for fluctuations in activity. However, according to some embodiments, the total cost for storage host 140 may be determined by simply aggregating the costs for the objects managed thereby, e.g., by summing the costs. On the other hand, other statistical methods may be applied to the costs for the objects before aggregation besides moving averages.

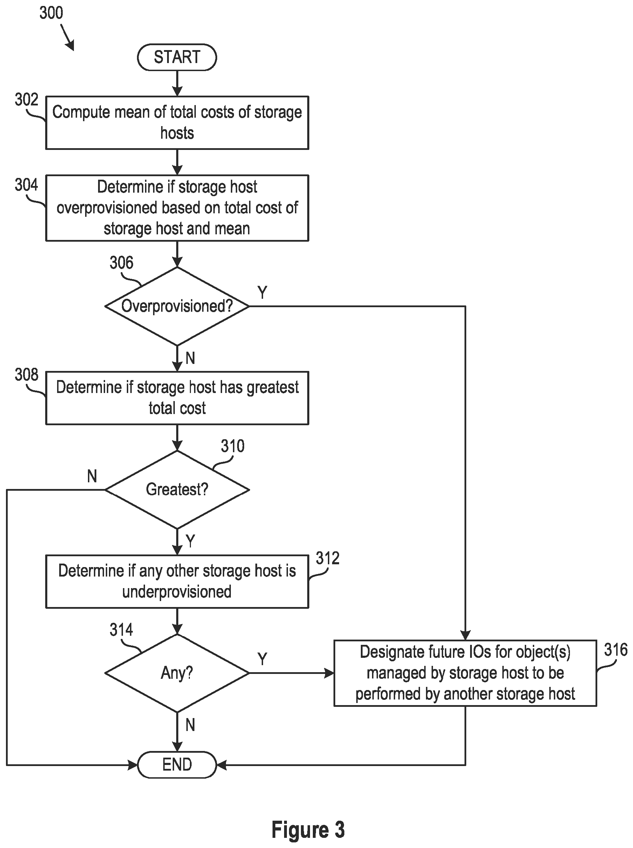

Figure 3 is a flow diagram of a method 300 that may be performed by one of storage hosts 140 to balance storage workloads of computer system 100, according to some embodiments. At step 302, storage host 140 computes a mean of the total costs of storage hosts 140. For example, storage host 140 may read each of the total costs from shared storage 170. Each of storage hosts 140 may have previously computed and persisted the total cost thereof according to method 200 of Figure 2.

At step 304, storage host 140 determines, based on its respective total cost and the mean, whether it is overprovisioned. For example, storage host 140 may determine a variance such as 5% and determine a balanced range based on the mean and the variance. Host 140 may then determine whether its total cost is within the balanced range, e.g., between 95% of the mean and 105% of the mean, or whether its total cost is outside the balanced range, i.e., greater or less than the mean by a threshold difference. If the total cost of storage host 140 is within the balanced range, storage host 140 may determine that it is balanced. If the total cost of host 140 is less than the lower bound of the balanced range, e.g., less than 95% of the mean, storage host 140 may determine that it is underprovisioned. If the total cost of host 140 is greater than the upper bound of the balanced range, e.g., greater than 105% of the mean, host 140 may determine that it is overprovisioned.

At step 306, if storage host 140 determines that it is overprovisioned, method 300 moves to step 316. Otherwise, if storage host 140 determines that it is balanced or underprovisioned, method 300 moves to step 308. At step 308, storage host 140 compares its total cost to the total costs of others of storage hosts 140 to determine whether it has the greatest total cost of all of storage hosts 140. At step 310, if storage host 140 determines that it does not have the greatest total cost, method 300 ends. Otherwise, if storage host 140 determines that it does have the greatest total cost, method 300 moves to step 312.

At step 312, storage host 140 determines if any of the others of storage hosts 140 is underprovisioned. Storage host 140 may compare the total costs of others of storage hosts 140 to a balanced range, e.g., between 95% of the mean and 105% of the mean. If the total cost of any of the others of storage hosts 140 is less than the lower bound of the balanced range, e.g., less than 95% of the mean, storage host 140 may determine that at least one of the others of storage hosts 140 is underprovisioned. At step 314, if none of the others of storage hosts 140 are underprovisioned, method 300 ends.

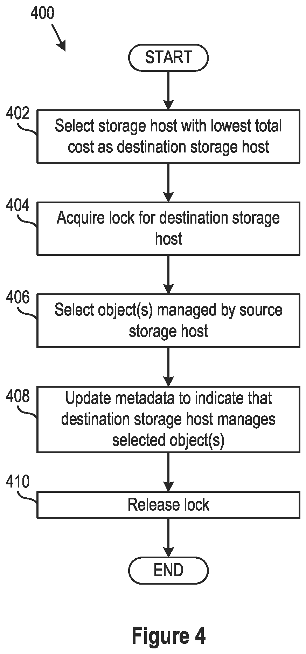

Otherwise, if at least one of the others of storage hosts 140 are underprovisioned, method 300 moves to step 316. At step 316, storage host 140 designates future IOs for one or more objects that it currently manages, to be performed by another one of storage hosts 140, as discussed further below in conjunction with Figure 4. After step 316, method 300 ends. Any of storage hosts 140 may perform method 300 periodically, e.g., every few minutes, to determine whether to balance storage workloads of computer system 100.

Figure 4 is a flow diagram of a method 400 that may be performed by one of storage hosts 140 to update the management of one or more objects, according to some embodiments. As used herein, the one of storage hosts 140 that is performing the steps of method 400 and that is currently managing the object(s), is referred to as a "source storage host." One of storage hosts 140 that is to begin managing the object(s) is referred to as a "destination storage host." Steps of method 400 may be performed by orchestrator service 152 of the source storage host.

At step 402, the source storage host selects another one of storage hosts 140 with the lowest total cost as the destination storage host. For example, storage host 140 may read each of the total costs of the others of storage hosts 140 from shared storage 170 and compare them. At step 404, the source storage host acquires a lock for the destination storage host. As just one example of a locking mechanism that may be used, orchestrator service 152 may write a request to a designated area of shared storage 170 for the lock for the destination storage host. If the lock is available, a monitoring service of computer system 100 may grant the lock to orchestrator service 152 and post information in shared storage 170 identifying such. For example, the monitoring service may be a distributed software that runs across all of storage hosts 140.

At step 406, the source storage host selects the object(s) to reassign, which are currently managed by the source storage host. The source storage host may apply a variety of methods for determining a best fit(s) for objects to reassign. For example, if the source storage host is overprovisioned, the source storage host may select an object(s) that, if reassigned, will lower the total cost of the source storage host by enough such that the source storage host will become balanced. As another example, if the destination storage host is underprovisioned, the source storage host may select an object(s) that, if reassigned, will raise the total cost of the destination storage host by enough such that the destination storage host will become balanced. A storage host being balanced is discussed above in conjunction with Figure 3.

At step 408, the source storage host updates metadata, e.g., in shared storage 170 alongside the selected object(s), to indicate that the destination storage host manages the selected object(s). Such metadata may be accessible to all of storage hosts 140, and such update designates that future IOs for the selected object(s) are to be performed by the destination storage host. At step 410, the source storage host releases the lock for the destination storage host. Continuing the above example, orchestrator service 152 may write a request to the designated area of shared storage 170 to release the lock for the destination storage host. The monitoring service may grant the release request and write information in the designated area indicating that the lock is released.

After step 410, method 400 ends. It should be noted that embodiments are not limited to the example of Figure 4 for designating that future IOs are to be performed by the destination storage host. For example, as discussed above, storage hosts 140 may store the entireties of the objects that they manage in local physical storage thereof. According to such example, the source storage host may transmit the object(s) from its local storage to the destination storage host, or at least a portion(s) thereof. The destination storage host may then store the object(s) or portion(s) thereof in its local storage to complete the transfer.

The embodiments described herein may employ various computer-implemented operations involving data stored in computer systems. For example, these operations may require physical manipulation of physical quantities. Usually, though not necessarily, these quantities are electrical or magnetic signals that can be stored, transferred, combined, compared, or otherwise manipulated. Such manipulations are often referred to in terms such as producing, identifying, determining, or comparing. Any operations described herein that form part of one or more embodiments may be useful machine operations.

The embodiments described herein also relate to an apparatus for performing these operations. The apparatus may be specially constructed for required purposes, or the apparatus may be a general-purpose computer selectively activated or configured by a computer program stored in the computer. The embodiments described herein may also be practiced with computer system configurations including mobile computing devices, personal computers, server computers, microprocessor systems, mainframe computers, etc., and combinations thereof, which may communicate across one or more networks.

The embodiments described herein also relate to one or more computer programs or as one or more computer program modules embodied in computer-readable storage media. The term computer-readable medium refers to any data storage device that can store data, which can thereafter be input into an apparatus or computer system. Computer-readable media may be based on any existing or subsequently developed technology that embodies computer programs in a manner that enables a computer to read the programs. Examples of computer-readable media include magnetic drives, SSDs, network-attached storage (NAS) systems, RAM, read-only memory (ROM), compact disks (CDs), digital versatile disks (DVDs), and other optical and non-optical data storage devices. A computer-readable medium can also be distributed over a network-coupled computer system so that computer-readable code is stored and executed in a distributed fashion.

Virtualized systems in accordance with the various embodiments may be implemented as hosted embodiments, non-hosted embodiments, or as embodiments that blur distinctions between the two. Furthermore, various virtualization operations may be wholly or partially implemented in hardware. For example, a hardware implementation may employ a look-up table for modification of storage access requests to secure non-disk data. Many variations, additions, and improvements are possible, regardless of the degree of virtualization. The virtualization software can therefore include components of a host, console, or guest OS that perform virtualization functions.

Although one or more embodiments of the present invention have been described in some detail for clarity of understanding, certain changes may be made within the scope of the claims. Accordingly, the described embodiments are to be considered as illustrative and not restrictive, and the scope of the claims is not to be limited to details given herein but may be modified within the scope and equivalents of the claims. In the claims, elements and steps do not imply any particular order of operation unless explicitly stated in the claims.

Boundaries between components, operations, and data stores are somewhat arbitrary, and particular operations are illustrated in the context of specific illustrative configurations. Other allocations of functionality are envisioned and may fall within the scope of the invention. In general, structures and functionalities presented as separate components may be implemented as a combined component. Similarly, structures and functionalities presented as a single component may be implemented as separate components. These and other variations, additions, and improvements may fall within the scope of the appended claims.

## Claims

1. A method of balancing storage workloads executing in a computer system that includes a plurality of host computers, the method comprising:
determining first object costs respectively associated with first storage objects managed by a first host computer of the host computers, the first object costs being based on first input/output operations, IOs, performed on the first storage objects;
determining second object costs respectively associated with second storage objects managed by a second host computer of the host computers, the second object costs being based on second IOs performed on the second storage objects;
determining a first total cost for the first host computer by aggregating the first object costs, and determining a second total cost for the second host computer by aggregating the second object costs; and
based at least on the first and second total costs, designating third IOs on one of the first storage objects to be performed by the second host computer.

2. The method of claim 1, wherein
designating the third IOs to be performed on the second host computer comprises:
updating metadata in the computer system to indicate that the second host computer manages the one of the first storage objects, the metadata being accessible to each of the plurality of host computers.

3. The method of claim 1 or 2, wherein
designating the third IOs to be performed on the second host computer comprises:
transferring at least a portion of the one of the first storage objects from physical storage of the first host computer to physical storage of the second host computer.

4. The method of any one of the claims 1 to 3, further comprising:
determining, for each of the first storage objects, amounts of computing resources of the computer system expected to be consumed when those of the first IOs associated with the first storage object are performed, and wherein for each of the first storage objects, the first object cost thereof is determined based at least on the determined amounts of the computing resources expected to be consumed by the first IOs associated with first storage object.

5. The method of any one of the claims 1 to 4, further comprising:
determining, for each of the first storage objects, amounts of time taken for those of the first IOs associated with the first storage object to be completed; and
determining, for each of the first storage objects, latency costs of those of the first IOs associated with the first storage object, based on the amounts of time taken for those of the first IOs associated with the first storage object to be completed, the first object costs being determined based at least on the determined latency costs.

6. The method of any one of the claims 1 to 5, wherein
the first object costs are moving averages, and determining the first object costs comprises:
aggregating, for each of the first storage objects, costs of the first IOs associated with the first storage object to determine an aggregated cost for the first storage object;
identifying, for each of the first storage objects, a previously computed moving average for the first storage object; and
computing, for each of the first storage objects, the first object cost thereof based on the aggregated cost of the first IOs associated therewith and the previously computed moving average therefor.

7. The method of any one of the claims 1 to 6, further comprising:
computing a mean of a plurality of total costs of the plurality of host computers, the plurality of total costs including the first and second total costs; and
determining that the first total cost is greater than the mean by a threshold difference, the second host computer being caused to perform the third IOs based at least on the first total cost being greater than the mean by the threshold difference.

8. The method of any one of the claims 1 to 7, further comprising:
computing a mean of a plurality of total costs of the plurality of host computers, the plurality of total costs including the first and second total costs; and
determining that the second total cost is less than the mean by a threshold difference, the second host computer being caused to perform the third IOs based at least on the second total cost being less than the mean by the threshold difference.

9. A computer system including a plurality of host computers, each of the host computers including a processor and memory, and wherein the processors of the host computers execute instructions stored in the respective memory of the host computers to balance storage workloads executing in the computer system by performing a method as set forth in any one of the claims 1 to 8.

10. A plurality of non-transitory, computer-readable media comprising instructions that are executable in a plurality of host computers of a computer system, wherein the instructions when executed cause the host computers to carry out a method as set forth in any one of the preceding claims 1 to 8.
